# EUROPEAN PATENT APPLICATION

(11) **EP 4 394 657 A1**
(43) Date of publication of application: **03.07.2024**
(21) Application number: 22909731.6
(22) Date of filing: 06.12.2022
(51) Int. Cl.: G06N 3/04

(54) **NEURAL NETWORK GENERATION METHOD, INDICATION INFORMATION SENDING METHOD, COMMUNICATION NODE, AND MEDIUM**

(30) Priority: 24.12.2021 CN 202111599620
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); WU, Hao, Shenzhen, Guangdong 518057 (CN); LI, Lun, Shenzhen, Guangdong 518057 (CN)
(74) Representative: Regimbeau
(86) International application number: PCT/CN2022/136910
(87) International publication number: WO 2023/116416

(57) **Abstract**

Provided are a neural network generation method, an indication information sending method, a communication node, and a medium. The neural network generation method includes receiving neural network indication information; generating a target neural network according to N original neural networks and the neural network indication information, where N is a positive integer.

## Description

### TECHNICAL FIELD

The present application relates to the field of communication technology, for example, a neural network generation method, an indication information sending method, a communication node, and a medium.

### BACKGROUND

With the continuous development of communication technology, artificial intelligence (AI)/machine learning (ML) has been studied. The studied content includes but is not limited to applications such as channel state information (CSI) feedback, beam management, channel estimation, positioning, interference management, user scheduling, and power control. Each application is implemented with at least one neural network model of a dedicated function and the corresponding neural network parameters of the model. For the same application such as CSI feedback, different compression rates, different numbers of antennas, different bandwidths, different delay spreads, and different delay distributions may all result in the need for neural network models of different sizes or different neural network parameters of the same neural network model to adapt to different situations. In this manner, a terminal needs to configure many neural network models or configure many sets of neural network parameters for the same neural network model, which results in a large signaling overhead for transmitting neural networks or requires a huge storage space of the terminal.

### SUMMARY

Embodiments of the present application provide a neural network generation method. The method includes the operations below.

Neural network indication information is received.

A target neural network is generated according to N original neural networks and the neural network indication information. N is a positive integer.

Embodiments of the present application provide an indication information sending method. The method includes the operations below.

Neural network indication information is sent. The neural network indication information is configured to instruct a communication node to generate a target neural network according to N original neural networks. N is a positive integer.

Embodiments of the present application provide a communication node. The communication node includes a processor which, when executing a computer program, implements the method of any of the preceding embodiments.

Embodiments of the present application also provide a computer-readable storage medium storing a computer program which, when executed by a processor, implements the method of any of the preceding embodiments.

The preceding embodiments and other aspects of the present application and implementations thereof are described in more detail in the brief description of drawings, detailed description, and claims.

### BRIEF DESCRIPTION OF DRAWINGS

FIG. 1 is a diagram illustrating the networking of a wireless communication system according to an embodiment.
FIG. 2 is a flowchart of a neural network generation method according to an embodiment.
FIG. 3 is a flowchart of an indication information sending method according to an embodiment.
FIG. 4 is a diagram illustrating the generation of a target neural network according to an embodiment.
FIG. 5 is a diagram illustrating a scenario converter according to an embodiment.
FIG. 6 is a diagram illustrating an interference canceler according to an embodiment.
FIG. 7 is a diagram illustrating the feature extraction at multiple resolutions according to an embodiment.
FIG. 8 is a diagram illustrating a CSI feedback module according to an embodiment.
FIG. 9 is a diagram illustrating the structure of a neural network generation apparatus according to an embodiment.
FIG. 10 is a diagram illustrating the structure of an indication information sending apparatus according to an embodiment.
FIG. 11 is a diagram illustrating the structure of a base station according to an embodiment.
FIG. 12 is a diagram illustrating the structure of a UE according to an embodiment.

### DETAILED DESCRIPTION

It is to be understood that the specific embodiments described herein are intended to explain the present application and not to limit the present application. Embodiments of the present application are described hereinafter in detail in conjunction with drawings.

Currently, AI, especially AI based on deep learning, has a very strong feature extraction capability and is widely used in all aspects of production and life. AI, after being introduced into the wireless communication system, is deeply integrated with the wireless communication system to improve the performance of the wireless communication system, which gains widespread consensus and research among manufacturers, research institutions, and researchers. The research content includes but is not limited to applications such as CSI feedback, beam management, channel estimation, positioning, interference management, user scheduling, and power control. Each application is implemented with at least one neural network (also referred to as artificial intelligence network) of a dedicated function. The neural network includes but is not limited to a neural network model and a corresponding neural network parameter. One neural network model may correspond to at least one set of neural network parameters. The neural network parameter herein includes a neural network parameter and a corresponding value of the neural network parameter.

Even for the same application such as CSI feedback, different compression rates, different numbers of antennas, different bandwidths, different delay spreads, and different delay distributions may all result in the need for neural network models of different sizes or the same neural network model training multiple sets of different neural network parameters to adapt to different situations. In this manner, a terminal needs to configure many neural network models or configure many sets of neural network parameters for the same neural network model, which results in a large signaling overhead for transmitting neural networks or requires a huge storage space of the terminal.

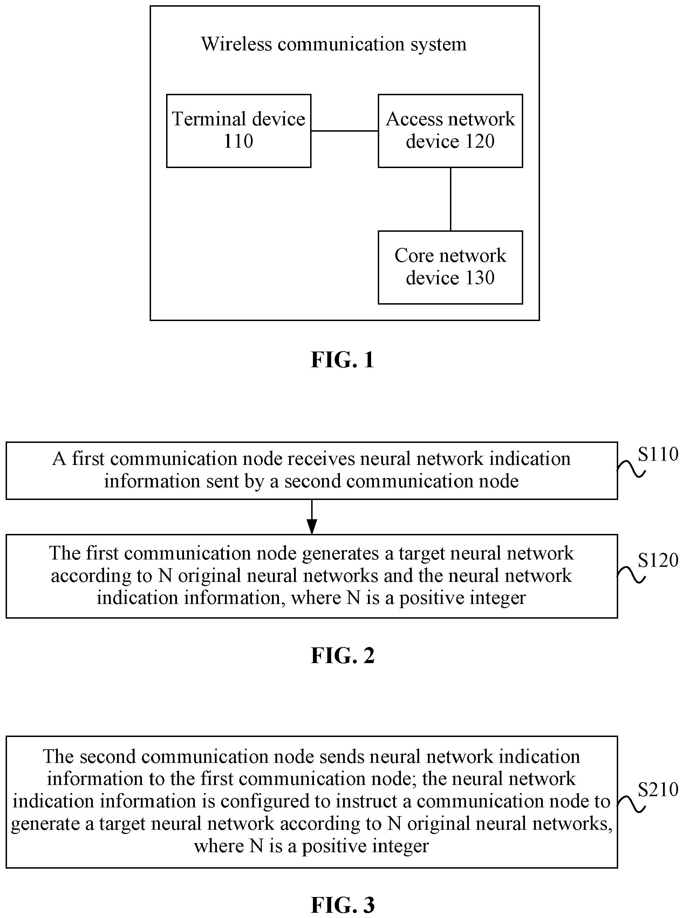

The neural network generation method and the indication information sending method according to the present application may be applied to various types of wireless communication systems, such as a Long-Term Evolution (LTE) system, a 4th-generation mobile communication technology (4G) system, a 5th-generation mobile communication technology (5G) system, a LTE and 5G hybrid architecture system, a 5G New Radio (NR) system, and a new communication system emerging in future communication development, for example, a 6th-generation mobile communication technology (6G) system. FIG. 1 is a diagram illustrating the networking of a wireless communication system according to an embodiment. As shown in FIG. 1, the wireless communication system includes a terminal device 110, an access network device 120, and a core network device 130.

The terminal device 110 may be a device having radio transceiving functions. The device may be deployed on land (such as being indoor or outdoor, handled, wearable or vehicle-mounted); may also be deployed on the water surface (such as in ships); and may also be deployed in the air (such as in airplanes, balloons, and satellites). Examples of some terminal devices 110 are as follows: User Equipment (UE), a mobile phone, a mobile station, a tablet computer, a notebook computer, an ultra-mobile personal computer (UMPC), a handheld computer, a netbook, a personal digital assistant (PDA), and other user equipment that can be networked; a virtual reality (VR) terminal, an augmented reality (AR) terminal, a wireless terminal in industrial control, a wireless terminal in self-driving, a wireless terminal in remote medical, a wireless terminal in a smart grid, a wireless terminal in transportation safety, a wireless terminal in a smart city, and a wireless terminal in a smart home; an IoT node in the Internet of Things (IoT); an in-vehicle communication apparatus in the Internet of Vehicles; an entertainment and game device or system; or a global positioning system device. The embodiments of the present application do not limit the specific technology and the specific device configuration used by the terminal device. Additionally, the terminal device may be referred to as a terminal.

The access network device 120 is an access device through which the terminal device 110 wirelessly accesses the wireless communication system and may be a base station, an evolved base station (evolved NodeB, eNB, or eNodeB) in Long Term Evolution Advanced (LTE-A), a transmission reception point (TRP), a base station in the 5G mobile communication system, a next generation base station (next generation NodeB or gNB), a base station in a future mobile communication system, or an access node in a Wireless Fidelity (WiFi) system. The base station may include various network side devices such as a macro base station, a micro base station, a Home base station(Femto), a radio remote, a router, a WiFi device, or a primary cell and a secondary cell, and location management function (LMF) devices. The access network device 120 may also be a module or unit that performs part of functions of the base station, for example, a central unit (CU) or a distributed unit (DU). The embodiments of the present application do not limit the specific technology and the specific device configuration used by the access network device. Additionally, the access network device may be referred to as a base station.

The core network device 130 may include an access and mobility management network element and a session management network element. Illustratively, the terminal device 110 may access the core network through the access network device 120, thereby enabling data transmission.

In the embodiments of the present application, a neural network generation method and an indication information sending method that can run in the preceding wireless communication systems, a communication node, and a medium are provided to dynamically generate a neural network based on neural network indication information, reduce the signaling overhead of the system, and improve the performance of the wireless communication system.

First, the concepts involved in the following embodiments of the present application are explained:
In the embodiments of the present application, higher-layer signaling includes but is not limited to radio resource control (RRC) and media access control control element (MAC CE). Physical layer signaling may be transmitted between a first communication node and a second communication node. For example, the downlink transmits physical layer signaling on the Physical Downlink Control Channel (PDCCH), the uplink transmits physical layer signaling on the Physical Uplink Control Channel (PUCCH), and the physical random-access channel (PRACH).

The communication node in the embodiments of the present application may be an access network device or a terminal.

In the embodiments of the present application, indicators of various parameters may also be called indexes, and they are completely equivalent concepts. For example, a neural network indicator and a neural network index are equivalent, a sub-neural network indicator and a sub-neural network index are equivalent, and a neural network layer indicator and a neural network layer index are equivalent.

In the embodiments of the present application, an identifier is configured to identify a serial number and index of a thing. For example, an index corresponding to a reference signal resource, a reference signal resource group, a reference signal resource configuration, a CSI report, a CSI report set, a terminal device, a base station, a panel, a neural network, a sub-neural network, and a neural network layer.

In the embodiments of the present application, the pattern of a reference signal includes but is not limited to a resource element (RE) used for transmitting the reference signal. RE is a smallest time-frequency resource used for transmitting one modulation symbol, including one frequency domain sub-carrier and a radio resource on one symbol. The symbol may be an Orthogonal Frequency Division Multiplexing (OFDM) symbol, an Orthogonal Frequency Division Multiple Access (FDMA) symbol, a Single-Carrier Frequency Division Multiple Access (SC-FDMA) symbol, or other types of symbols. Radio resources composed of multiple symbols and multiple sub-carriers constitute a physical resource block. For example, 14 consecutively indexed symbols and 12 consecutively indexed sub-carriers constitute a physical resource block (PRB). The reference signal includes but is not limited to a Positioning Reference Signal (PRS), a Sounding Reference Signal (SRS), and a Channel-State Information reference signal (CSI-RS).

In the embodiments of the present application, artificial intelligence (AI) includes ML, deep learning, reinforcement learning, transfer learning, deep reinforcement learning, meta-learning, and other self-learning devices, modules, codes, and the like. In an embodiment, artificial intelligence is implemented through a neural network. The neural network includes multiple layers, and each layer includes at least one node. For example, the neural network includes an input layer, an output layer, and at least one hidden layer. Each layer of the neural network includes but is not limited to at least one of a full connection layer, a dense layer, a convolutional layer, a transposed convolutional layer, a direct connection layer, an activation function, a normalization layer, and a pooling layer. In an embodiment, each layer of the neural network may include a sub-neural network, such as a Residual Network block or Resnet block, a Densenet Block, and a Recurrent Neural Network (RNN).

The neural network includes a neural network model and/or a neural network parameter corresponding to the neural network model. A neural network model defines the architecture of a neural network such as the number of layers of the neural network, the size of each layer, an activation function, a link state, the convolution kernel size and convolution step size, and a convolution type (such as 1D convolution, 2D convolution, 3D convolution, hollow convolution, transposed convolution, separable convolution, grouped convolution, and expanded convolution). The neural network parameter is the weight and/or bias of each layer of the neural network in the neural network model and the value of the neural network parameter. One neural network model may correspond to multiple different sets of neural network parameters to adapt to different scenarios. The value of the neural network parameter may be acquired by offline training and/or online training.

In the embodiments of the present application, AB or A->B is used for indicating that a neural network or a sub-neural network A is followed and linked by a neural network or a sub-neural network B, that is, an output of A is used as an input of B. (A, B) is used for indicating that the neural network or the sub-neural network A and the neural network or the sub-neural network B are parallel and summed, that is, inputs of A and B are the same, and the output sum is used as a total output. <A, B> indicates that the neural network or the sub-neural network A and the neural network or the sub-neural network B are parallel and connected, that is, inputs of A and B are the same, and an output of A and an output of B are connected as a total output.

In the embodiments of the present application, an index of a neural network or a sub-neural network may be numbered from 0 or 1. Adjustment is done according to context.

A neural network generation method, an indication information sending method, a communication node, and technical effects thereof are described below.

FIG. 2 is a flowchart of a neural network generation method according to an embodiment. As shown in FIG. 2, the method provided in this embodiment is applicable to a first communication node. In this example, a first communication node (which may also be referred to as a first communication node device) in a downlink may be a base station, and a second communication node (which may also be referred to as a second communication node device) may be a terminal device. Similarly, a first communication node in an uplink may be a terminal device, and a second communication node may be a base station. In device-to-device communication between two communication nodes, both the first communication node and the second communication node may be a base station or a terminal device. The method includes the operations below.

In S110, a first communication node receives neural network indication information sent by a second communication node.

In an embodiment, before S110 is performed, the first communication node may also receive N original neural networks sent by the second communication node. Each original neural network includes a neural network model and a neural network parameter corresponding to the neural network model. For example, the N original neural networks include N neural network models, and the N neural network models correspond to M sets of neural network parameters. That is, some neural network models correspond to a set of neural network parameters, and some neural networks correspond to more than one set of neural network parameters.

The N original neural networks are used for X applications. For example, X applications include but are not limited to one of the following: positioning, CSI feedback, beam management, beam prediction, beam selection, channel estimation, noise removal, interference removal, user scheduling, sequence generation, information compression and information decompression, demodulation, and mobility management. X, N, and M are all positive integers, X is less than or equal to N, and N is less than or equal to M.

In an embodiment, each of the N original neural networks includes at least one sub-neural network. For example, N original neural networks are *A₁*,*A*₂,...,*A_{N}*; the i-th original neural network *Aᵢ* includes *Nᵢ* sub-neural networks, denoted as *A*_{*i*,0},*A*_{*i*,1},···,*A*_{*i*,*Ni*-1}, *Nᵢ* is a positive integer, and i=1,2,...,*N*. Illustratively, in CSI feedback, the entire original neural network is divided into two sub-neural networks, that is, an encoder and a decoder. The encoder is located in a terminal device and is configured to compress channel information. The decoder is located in a base station and is configured to decompress the channel state information output by the encoder to recover the channel information. For another example, in positioning, multipath information of a channel needs to be fed back, and a channel multipath compression module needs to be configured to compress the channel multipath information to reduce the amount of feedback and feed back the compressed channel multipath information to the base station. The base station feeds back the compressed multipath information to a positioning server, and the positioning server processes the compressed multipath information (the processing herein may be positioning based on artificial intelligence) to acquire the location of the terminal.

In an embodiment, the second communication node may send N original neural networks to the first communication node through the first higher-layer signaling such as the first RRC signaling. The first higher-layer signaling is only transmitted once as required when the computer is turned on or from the inactive state to the active state. Of course, the first communication node may trigger the second communication node to perform one-time transmission as required. Alternatively, the second communication node to which the first higher-layer signaling belongs performs one-time transmission periodically. In this manner, the first communication node and the second communication node both have N original neural networks (including a neural network model and a neural network parameter corresponding to the neural network model), and the N original neural networks are stored in a storage module of the first communication node and the second communication node. Optionally, the N original neural networks are transmitted to the first communication node multiple times through a lot of first higher-layer signaling. Optionally, multiple sub-neural networks of one original neural network among the N original neural networks are transmitted to the first communication node multiple times through a lot of first higher-layer signaling. It should be noted that the N original neural networks may also be stored locally by the first communication node and/or the second communication node, for example, by factory settings, or acquired from a third-party communication node.

In an embodiment, the neural network indication information is higher-layer signaling such as the second higher-layer signaling. The second higher-layer signaling may be RRC signaling or MAC CE signaling. In an embodiment, the neural network indication information is a combined signaling of higher-layer signaling and/or physical layer signaling.

The neural network indication information may include first-level information or first-level information and second-level information.

In a possible implementation, the neural network indication information includes first-level information configured to indicate K original neural networks in the N original neural networks, where K is a positive integer less than or equal to N. Preferably, N is an integer greater than or equal to 2.

That is, the first-level information includes an index of a group of original neural networks and is used for indicating indexes of K original neural networks selected from the N original neural networks. The K original neural networks are used for forming a new neural network, that is, a target neural network.

Optionally, when K is greater than or equal to 2, the first-level information is also used for indicating the sequence of the K original neural networks. The sequence refers to the arrangement sequence, the time sequence relationship, or the structure sequence of neural networks/sub-neural networks. For example, the index arrangement of the original neural networks has a sequence. The sequence of the original neural networks corresponding to the indexes in the target neural network is determined according to the index sequence. An original neural network corresponding to an index written in the front is ranked in the front of the target neural network. An original neural network corresponding to an index written in the back is ranked in the back of the target neural network. For example, the target neural network represented by the neural network indication information {0, 1} is the original neural network A1 followed and linked by the original neural network A2, that is, the target neural network is A1→A2; the target neural network represented by the neural network indication information {1, 0} is the original neural network A2 followed and linked by the original neural network A1, that is, the target neural network is A2→A1. In the case where K is greater than 2, the sequence in the target neural network may also be determined according to the sequence of indexes.

In another possible implementation, the neural network indication information includes first-level information and second-level information; the first-level information is configured to indicate K original neural networks in the N original neural networks, where K is a positive integer less than or equal to N; the second-level information is configured to indicate a sub-neural network of an original neural network of L original neural networks in the K original neural networks, where L is a positive integer less than or equal to K. The second-level information includes L indication sets. Each indication set is configured to indicate a sub-neural network of an original neural network.

That is, the first-level information includes an index of a group of original neural networks and is used for indicating indexes of K original neural networks selected from the N original neural networks. The K original neural networks are used for forming a new neural network, that is, a target neural network.

When K is greater than or equal to 2, the first-level information is also used for indicating the sequence of the K original neural networks. That is, the index arrangement of the original neural networks has a sequence. The sequence of the original neural networks corresponding to the indexes in the target neural network is determined according to the index arrangement sequence. An original neural network corresponding to an index written in the front is ranked in the front of the target neural network. An original neural network corresponding to an index written in the back is ranked in the back of the target neural network.

The second-level information includes L indication sets. Each indication set is configured to indicate a sub-neural network of an original neural network. Similarly, the second-level information is also used for indicating the sequence of sub-neural networks. That is, the indication set has a sequence. A sub-neural network corresponding to an index written in the front is ranked in the front of the target neural network. A sub-neural network corresponding to an index written in the back is ranked in the back of the target neural network.

It should be noted that when the sequence of all neural networks and/or sub-neural networks is determined, the sequence is first determined according to a sequence of original neural networks indicated by the first-level information; and if the indexes of the original neural networks are the same, the sequence is determined according to a sequence of sub-neural networks indicated by the second-level information.

Illustratively, in the case where the neural network indication information includes first-level information and second-level information, the following three situations may be specifically included:
In situation 1, when K = 1 and L = 1, the first-level information is used for indicating one original neural network in the N original neural networks, and the second-level information is used for indicating a sub-neural network in the one original neural network.

It is assumed that the N original neural networks are *A*₁,*A*₂,···,*A_{N}*; the first-level information indicates the original neural network *A*ᵢ among the N original neural networks, and the second-level information is used for indicating sub-neural networks *A*_{*i*,1} and *A*_{*i*,2} in the original neural network *A*ᵢ. For example, the second-level information {0, 1} indicates that the sub-neural network *A*_{*i*,1} is followed and linked by the sub-neural network *A*_{*i*,2}; the second-level information {1, 0} indicates that the sub-neural network *A*_{*i*,2} is followed and linked by the sub-neural network *A*_{*i*,1}.

In situation 2, when K = L ≠ 1, the first-level information is used for indicating K original neural networks in the N original neural networks, and the second-level information is used for indicating a sub-neural network of each original neural network in the K original neural networks.

It is assumed that the N original neural networks are *A*₁,*A*₂,···,*A_{N}*; the first-level information indicates two original neural networks in the N original neural networks, that is, *A*₁ and *A*₂, and the second-level information includes two indication sets. The indication set 1 is used for indicating sub-neural networks *A*_{1,1} and *A*_{1,2} in the original neural network *A*₁. The indication set 2 is used for indicating sub-neural networks *A*_{2,1} and *A*_{2,2} in the original neural network *A*₂. For example, the first-level information {0, 1} indicates that the original neural network *A*₁ is followed and linked by the original neural network *A*₂; the second-level information {0, 1} of the original neural network *A*₁ indicates that the sub-neural network *A*_{1,1} is followed and linked by the sub-neural network *A*_{1,2}, and the second-level information {0, 1} of the original neural network *A*₂ indicates that the sub-neural network *A*_{2,1} is followed and linked by the sub-neural network *A*_{2,2}. That is, the sequence of all sub-neural networks is as follows: The sub-neural network *A*_{1,1} is followed and linked by the sub-neural network *A*_{1,2}, the sub-neural network *A*_{1,2} is followed and linked by the sub-neural network *A*_{2,1}, and the sub-neural network *A*_{2,1} is followed and linked by the sub-neural network *A*_{2,2}.

In situation 3, when K ≠ L, the first-level information is used for indicating K original neural networks in the N original neural networks, and the second-level information is used for indicating a sub-neural network of an original neural network of the L original neural networks in the K original neural networks.

It is assumed that the N original neural networks are *A*₁,*A*₂,···,*A_{N}*; the first-level information indicates 2 original neural networks *A*₁ and *A*₂ among the N original neural networks, and the second-level information is used for indicating sub-neural networks *A*_{2,1} and *A*_{2,2} in the original neural network *A*₂. For example, the first-level information {0, 1} indicates that the original neural network *A*₁ is followed and linked by the original neural network *A*₂; the second-level information {0, 1} of the original neural network *A*₂ indicates that the sub-neural network *A*_{2,1} is followed and linked by the sub-neural network *A*_{2,2}. That is, the sequence of all original neural networks and sub-neural networks is as follows: The original neural network *A*₁ is followed and linked by the sub-neural network *A*_{2,1}, and the sub-neural network *A*_{2,1} is followed and linked by the sub-neural network *A*_{2,2}.

In an embodiment, the K original neural networks satisfy at least one of the following conditions:
The K original neural networks include at least one scenario conversion neural network.

The K original neural networks include at least one interference and/or noise cancellation neural network.

In an embodiment, the second-level information is also configured to indicate at least one of the following information: the number of repetitions of the sub-neural network; parameter sharing enable of the sub-neural network; a parallel or series relationship of the sub-neural network; or the sequence of the sub-neural network.

The parallel or series relationship of the sub-neural network refers to whether two sub-neural networks are parallel or serial. The sequence of the sub-neural network indicates the sequence of two sub-neural networks arranged in the target neural network.

In S120, the first communication node generates a target neural network according to N original neural networks and the neural network indication information, where N is a positive integer.

The first communication node generates a target neural network according to N original neural networks and the neural network indication information. The target neural network may be configured to implement a new function or adapt to changes in a new radio channel. That is, using the target neural network to process the input data can improve the performance of the wireless communication system or module. In this manner, the target neural network can be used for improving the performance of the original neural network, reducing the complexity of the original neural network and signaling overheads of the system, and improving the performance of the wireless communication system by at least one factor.

In an embodiment, after the target neural network is generated, the first communication node may also acquire a network training reference signal. Additionally, a neural network parameter of the target neural network is trained according to the network training reference signal.

In the present application, training the neural network parameter of the target neural network refers to the process of acquiring the value of the neural network parameter of the target neural network. For example, the corresponding neural network parameter is acquired when the target neural network is trained to acquire the local optimal value or the global optimal value of performance.

Specifically, the first communication node may adopt any of the following three methods to acquire the network training reference signal:
In method 1, the first communication node sends reference signal request information to the second communication node; the first communication node receives reference signal response information sent by the second communication node; the reference signal response information includes the network training reference signal.

In method 2, the first communication node receives the network training reference signal sent by the second communication node.

In method 3, the first communication node sends reference signal request information to the second communication node; after receiving reference signal response information sent by the second communication node, the first communication node receives the network training reference signal sent by the second communication node.

FIG. 3 is a flowchart of an indication information sending method according to an embodiment. As shown in FIG. 3, the method provided in this embodiment is applicable to a second communication node. In this example, a first communication node (which may also be referred to as a first communication node device) in a downlink may be a base station, and a second communication node (which may also be referred to as a second communication node device) may be a terminal device. Similarly, a first communication node in an uplink may be a terminal device, and a second communication node may be a base station. In device-to-device communication between two communication nodes, both the first communication node and the second communication node may be a base station or a terminal device. The method includes the operations below.

In S210, the second communication node sends neural network indication information to the first communication node; the neural network indication information is configured to instruct a communication node to generate a target neural network according to N original neural networks, where N is a positive integer.

In an embodiment, before S210 is performed, the second communication node may also send N original neural networks to the first communication node. Each original neural network includes a neural network model and a neural network parameter corresponding to the neural network model. For example, the N original neural networks include N neural network models, and the N neural network models correspond to M sets of neural network parameters. That is, some neural network models correspond to a set of neural network parameters, and some neural networks correspond to more than one set of neural network parameters.

The N original neural networks are used for X applications. For example, X applications include but are not limited to one of the following: positioning, CSI feedback, beam management, beam prediction, beam selection, channel estimation, noise removal, interference removal, user scheduling, sequence generation, information compression and information decompression, demodulation, and mobility management. X, N, and M are all positive integers, X is less than or equal to N, and N is less than or equal to M.

In an embodiment, each of the N original neural networks includes at least one sub-neural network. For example, N original neural networks are *A*₁,*A*₂,···,*A_{N}*; the i-th original neural network *A*ᵢ includes *Nᵢ* sub-neural networks, denoted as *A*_{*i*,0},*A*_{*i*,1},···,*A*_{*i*,*Ni*-1}, *Nᵢ* is a positive integer, and i=1,2,...,*N*. Illustratively, in CSI feedback, the entire original neural network is divided into two sub-neural networks, that is, an encoder and a decoder. The encoder is located in a terminal device and is configured to compress channel information. The decoder is located in a base station and is configured to decompress the channel state information output by the encoder to recover the channel information. For another example, in positioning, multipath information of a channel needs to be fed back, and a channel multipath compression module needs to be configured to compress the channel multipath information to reduce the amount of feedback and feed back the compressed channel multipath information to the base station. The base station feeds back the compressed multipath information to a positioning server, and the positioning server processes the compressed multipath information (the processing herein may be positioning based on artificial intelligence) to acquire the location of the terminal.

In an embodiment, the second communication node may send N original neural networks to the first communication node through the first higher-layer signaling such as the first RRC signaling. The first higher-layer signaling is only transmitted once as required when the computer is turned on or from the inactive state to the active state. Of course, the first communication node may trigger the second communication node to perform one-time transmission as required. Alternatively, the second communication node to which the first higher-layer signaling belongs performs one-time transmission periodically. In this manner, the first communication node and the second communication node both have N original neural networks (including a neural network model and a neural network parameter corresponding to the neural network model), and the N original neural networks are stored in a storage module of the first communication node and the second communication node. Optionally, the N original neural networks are transmitted to the first communication node multiple times through a lot of first higher-layer signaling. Optionally, multiple sub-neural networks of one original neural network among the N original neural networks are transmitted to the first communication node multiple times through a lot of first higher-layer signaling. It should be noted that the N original neural networks may also be stored locally by the first communication node and/or the second communication node, for example, by factory settings, or acquired from a third-party communication node.

In an embodiment, the neural network indication information is higher-layer signaling such as the second higher-layer signaling. The second higher-layer signaling may be RRC signaling or MAC CE signaling. In an embodiment, the neural network indication information is a combined signaling of higher-layer signaling and/or physical layer signaling.

The neural network indication information may include first-level information or first-level information and second-level information.

In a possible implementation, the neural network indication information includes first-level information configured to indicate K original neural networks in the N original neural networks, where K is a positive integer less than or equal to N. Preferably, N is an integer greater than or equal to 2.

That is, the first-level information includes an index of a group of original neural networks and is used for indicating indexes of K original neural networks selected from the N original neural networks. The K original neural networks are used for forming a new neural network, that is, a target neural network.

Optionally, when K is greater than or equal to 2, the first-level information is also used for indicating the sequence of the K original neural networks. The sequence refers to the arrangement sequence, the time sequence relationship, or the structure sequence of neural networks/sub-neural networks. For example, the index arrangement of the original neural networks has a sequence. The sequence of the original neural networks corresponding to the indexes in the target neural network is determined according to the index sequence. An original neural network corresponding to an index written in the front is ranked in the front of the target neural network. An original neural network corresponding to an index written in the back is ranked in the back of the target neural network. For example, the target neural network represented by the neural network indication information {0, 1} is the original neural network A1 followed and linked by the original neural network A2, that is, the target neural network is A1→A2; the target neural network represented by the neural network indication information {1, 0} is the original neural network A2 followed and linked by the original neural network A1, that is, the target neural network is A2→A1. In the case where K is greater than 2, the sequence in the target neural network may also be determined according to the sequence of indexes.

In another possible implementation, the neural network indication information includes first-level information and second-level information; the first-level information is configured to indicate K original neural networks in the N original neural networks, where K is a positive integer less than or equal to N; the second-level information is configured to indicate a sub-neural network of an original neural network of L original neural networks in the K original neural networks, where L is a positive integer less than or equal to K. The second-level information includes L indication sets. Each indication set is configured to indicate a sub-neural network of an original neural network.

That is, the first-level information includes an index of a group of original neural networks and is used for indicating indexes of K original neural networks selected from the N original neural networks. The K original neural networks are used for forming a new neural network, that is, a target neural network.

When K is greater than or equal to 2, the first-level information is also used for indicating the sequence of the K original neural networks. That is, the index arrangement of the original neural networks has a sequence. The sequence of the original neural networks corresponding to the indexes in the target neural network is determined according to the index arrangement sequence. An original neural network corresponding to an index written in the front is ranked in the front of the target neural network. An original neural network corresponding to an index written in the back is ranked in the back of the target neural network.

The second-level information includes L indication sets. Each indication set is configured to indicate a sub-neural network of an original neural network. Similarly, the second-level information is also used for indicating the sequence of sub-neural networks. That is, the indication set has a sequence. A sub-neural network corresponding to an index written in the front is ranked in the front of the target neural network. A sub-neural network corresponding to an index written in the back is ranked in the back of the target neural network.

It should be noted that when the sequence of all neural networks and/or sub-neural networks is determined, the sequence is first determined according to a sequence of original neural networks indicated by the first-level information; and if the indexes of the original neural networks are the same, the sequence is determined according to a sequence of sub-neural networks indicated by the second-level information.

Illustratively, in the case where the neural network indication information includes first-level information and second-level information, the following three situations may be specifically included:
In situation 1, when K = 1 and L = 1, the first-level information is used for indicating one original neural network in the N original neural networks, and the second-level information is used for indicating a sub-neural network in the one original neural network.

It is assumed that the N original neural networks are *A*₁,*A*₂,···,*A_{N}*; the first-level information indicates the original neural network *A*ᵢ among the N original neural networks, and the second-level information is used for indicating sub-neural networks *A*_{*i*,1} and *A*_{*i*,2} in the original neural network *A*ᵢ. For example, the second-level information {0, 1} indicates that the sub-neural network *A*_{*i*,1} is followed and linked by the sub-neural network *A*_{*i*,2}; the second-level information {1, 0} indicates that the sub-neural network *A*_{*i*,2} is followed and linked by the sub-neural network *A*_{*i*,1}.

In situation 2, when K = L ≠ 1, the first-level information is used for indicating K original neural networks in the N original neural networks, and the second-level information is used for indicating a sub-neural network of each original neural network in the K original neural networks.

It is assumed that the N original neural networks are *A*₁,*A*₂,...,*A_{N}*; the first-level information indicates two original neural networks in the N original neural networks, that is, *A*₁ and *A*₂, and the second-level information includes two indication sets. The indication set 1 is used for indicating sub-neural networks *A*_{1,1} and *A*_{1,2} in the original neural network *A*₁. The indication set 2 is used for indicating sub-neural networks *A*_{2,1} and *A*_{2,2} in the original neural network *A*₂. For example, the first-level information {0, 1} indicates that the original neural network *A*₁ is followed and linked by the original neural network *A*₂; the second-level information {0, 1} of the original neural network *A*₁ indicates that the sub-neural network *A*_{1,1} is followed and linked by the sub-neural network *A*_{1,2}, and the second-level information {0, 1} of the original neural network *A*₂ indicates that the sub-neural network *A*_{2,1} is followed and linked by the sub-neural network *A*_{2,2}. That is, the sequence of all sub-neural networks is as follows: The sub-neural network *A*_{1,1} is followed and linked by the sub-neural network *A*_{1,2}, the sub-neural network *A*_{1,2} is followed and linked by the sub-neural network *A*_{2,1}, and the sub-neural network *A*_{2,1} is followed and linked by the sub-neural network *A*_{2,2}.

In situation 3, when K ≠ L, the first-level information is used for indicating K original neural networks in the N original neural networks, and the second-level information is used for indicating a sub-neural network of an original neural network of the L original neural networks in the K original neural networks.

It is assumed that the N original neural networks are *A*₁,*A*₂,···,*A_{N}*; the first-level information indicates 2 original neural networks *A*₁ and *A*₂ among the N original neural networks, and the second-level information is used for indicating sub-neural networks *A*_{2,1} and *A*_{2,2} in the original neural network *A*₂. For example, the first-level information {0, 1} indicates that the original neural network *A*₁ is followed and linked by the original neural network *A*₂; the second-level information {0, 1} of the original neural network *A*₂ indicates that the sub-neural network *A*_{2,1} is followed and linked by the sub-neural network *A*_{2,2}. That is, the sequence of all original neural networks and sub-neural networks is as follows: The original neural network *A*₁ is followed and linked by the sub-neural network *A*_{2,1}, and the sub-neural network *A*_{2,1} is followed and linked by the sub-neural network *A*_{2,2}.

In an embodiment, the K original neural networks satisfy at least one of the following conditions:
The K original neural networks include at least one scenario conversion neural network.

The K original neural networks include at least one interference and/or noise cancellation neural network.

In an embodiment, the second-level information is also configured to indicate at least one of the following information: the number of repetitions of the sub-neural network; parameter sharing enable of the sub-neural network; a parallel or series relationship of the sub-neural network; or the sequence of the sub-neural network.

The parallel or series relationship of the sub-neural network refers to whether two sub-neural networks are parallel or serial. The sequence of the sub-neural network indicates the sequence of two sub-neural networks arranged in the target neural network.

In an embodiment, after S210 is performed, the second communication node may also receive reference signal request information sent by the first communication node and send reference signal response information to the first communication node, where the reference signal response information includes a network training reference signal configured to train a neural network parameter of the target neural network; send a network training reference signal to the first communication node, where the network training reference signal is configured to train a neural network parameter of the target neural network; or receive reference signal request information sent by the first communication node and after sending reference signal response information to the first communication node, send a network training reference signal to the first communication node, where the network training reference signal is configured to train a neural network parameter of the target neural network.

Some example embodiments are listed below to illustrate the method for generating a target neural network in the preceding embodiments of the present application. The example embodiments below may be implemented independently or in combination. In the following example embodiments, the first communication node is denoted as UE, and the second communication node is denoted as a base station.

In a first example embodiment, assuming that only one original neural network A exists, the original neural network A has N₁ sub-neural networks denoted as *A*_{1,0},*A*_{1,1},···,*A*_{1,*N*1-1}.

The base station indicates, through the neural network indication information, that K₁ sub-neural networks in the N₁ sub-neural networks are used for forming a target neural network, where K₁ is less than or equal to N₁. The UE receives the neural network indication information and forms a target neural network according to the neural network indication information and the original neural network A. For example, the UE queries the locally stored original neural network A through the neural network indication information, finds K₁ sub-neural networks corresponding to the neural network indication information, and forms a target neural network by using the K₁ sub-neural networks.

In an embodiment, the neural network indication information may indicate the number of times a sub-neural network is used.

In an embodiment, the neural network indication information is higher-layer signaling and/or physical layer signaling, including but not limited to an index of a neural network and a sub-neural network index set. For example, both the base station and the UE have N neural networks. The index of the original neural network A is 1, and A has N₁ sub-neural networks corresponding to indexes 0, ..., N₁ - 1. Then the neural network indication information may include two levels of information. The first-level information is used for indicating an index of the original neural network A, such as 1. The second-level information is used for indicating that K₁ sub-neural networks of the N₁ sub-neural networks of the original neural network A are used for forming the target neural network.

For example, the second-level information {0, 1, 2, 3, 4, 5, 5, 5, 5, 7} indicates that sub-neural networks whose sub-neural network indexes are 0, 1, 2, 3, 4, 5, 7 are selected to form a target neural network. The sub-neural network whose sub-neural network index is 5 is repeated three times, that is, the target network includes three sub-neural networks whose sub-neural network index is 5. The index arrangement included in the neural network indication information herein has a sequence. The sequence of the sub-neural networks corresponding to the indexes in the target neural network is determined according to the index sequence. A sub-neural network corresponding to an index written in the front is ranked in the front of the target neural network. A sub-neural network corresponding to an index written in the back is ranked in the back of the target neural network. For example, {0, 1, 2, 3, 4, 5, 5, 5, 7} indicates that the target neural network is composed of the following sub-neural networks in series, that is, the target neural network is A_{1,0}→A_{1,1}→A_{1,2}→A_{1,3}→A_{1,4}→A_{1,5}→A_{1,5}→A_{1,5}→A_{1,7}.

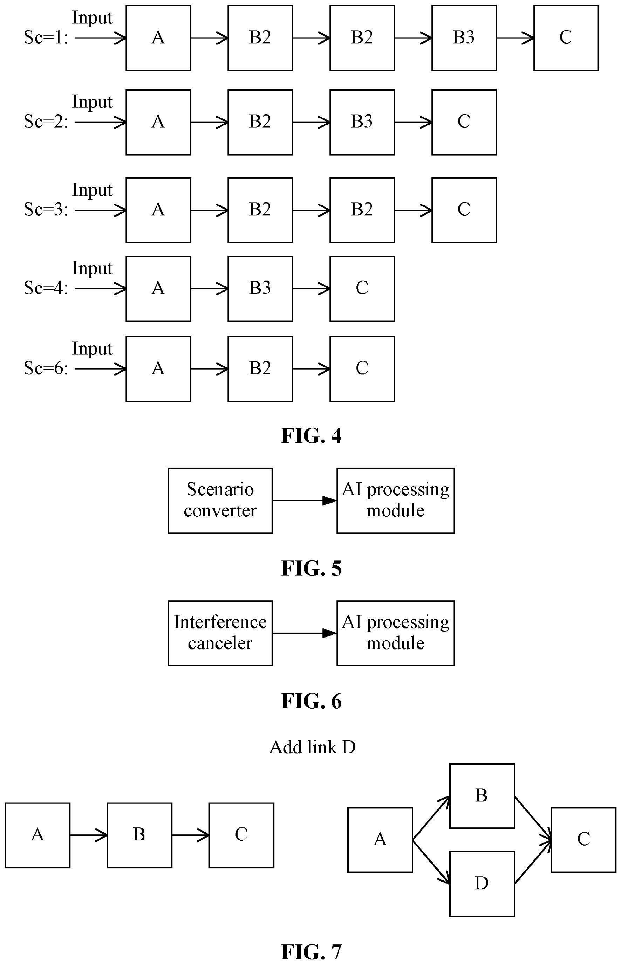

For example, when a neural network is used for demodulation reference signal (DMRS) channel estimation, it is assumed that for one PRB, Sc = 1, 2, 4, and 6 DMRS REs in the frequency domain, and DMRS REs are on 2 symbols in the time domain, but a channel of 168 REs needs to be estimated on the entire PRB, that is, 12 sub-carriers* 14 symbols. Then when Sc = 1, 2 sub-neural systems expanded by 2 times and 1 sub-neural network expanded by 3 times are required. When Sc = 2, 1 sub-neural system expanded by 2 times and 1 sub-neural network expanded by 3 times are required. When Sc = 4, a sub-neural network expanded by 3 times is required. When Sc = 6, a sub-neural network expanded by 2 times is required. Expanding a sub-neural system several times includes but is not limited to using transposed convolution to expand the data dimension through different step sizes and using interpolation or pixel shuffle to expand the data dimension. Some processing such as feature extraction and dimension adjustment may be performed before or after data dimension extension. In addition, the expansion by several times mentioned herein is from the frequency domain. In a sub-neural system that is expanded several times, the RE multiples on the time domain symbols may be expanded simultaneously, and the description is not repeated herein. For example, a neural network includes four sub-neural networks, namely, A, B2, B3, and C. A is configured to perform processing such as at least one of normalization processing, dimension adjustment, and feature extraction on the original input data. B2 and B3 are sub-neural systems expanded by 2 times and 3 times. C is a module such as a feature extraction module or a dimension adjustment module. FIG. 4 is a diagram illustrating the generation of a target neural network according to an embodiment. As shown in FIG. 4, when Sc = 1, the first-level information of the neural network indication information may be configured as an index of the neural network, and the second-level information is {0, 1, 1, 2, 3}, that is, the target neural network is A→B2→B2→B3→C; when Sc = 2, the second-level information is {0, 1, 2, 3}, that is, the target neural network is A→B2→B3→C; when Sc = 3, the second-level information is {0, 1, 1, 3}, that is, the target neural network is A→B2→B2→C; when Sc = 4, the second-level information is {0, 2, 3}, that is, the target neural network is A→B3→C; when Sc = 6, the second-level information is {0, 1, 3}, that is, the target neural network is A→B2→C.

In a second example embodiment, it is assumed that N original neural networks *A*₁,*A*₂,···,*A_{N}* exi st.

The base station indicates, through the neural network indication information, that K original neural networks in the N original neural networks are used for forming a target neural network, where K is less than or equal to N. The UE receives the neural network indication information and forms a target neural network according to the neural network indication information and the K original neural networks. For example, the UE queries the locally stored N original neural networks through the neural network indication information, finds K original neural networks corresponding to the neural network indication information, and forms a target neural network by using the K original neural networks.

In an embodiment, the neural network indication information is higher-layer signaling and/or physical layer signaling, including but not limited to an index of a neural network. For example, both the base station and the UE have N neural networks, including two original neural networks A1 and A2. The index of the original neural network A1 is 0. The index of the original neural network A2 is 1. Then, the neural network indication information may include first-level information. The first-level information is used for indicating the indexes of the original neural networks A1 and A2, such as {0, 1} so that the UE finds the original neural networks A1 and A2 to serially form a target neural network according to the received neural network indication information. It should be noted that for the case where K is greater than 2, the target neural network may be determined in a similar manner. The index arrangement included in the neural network indication information herein has a sequence. The sequence of the original neural networks corresponding to the indexes in the target neural network is determined according to the index sequence. An original neural network corresponding to an index written in the front is ranked in the front of the target neural network. An original neural network corresponding to an index written in the back is ranked in the back of the target neural network. For example, the target neural network represented by the neural network indication information {0, 1} is A1 followed and linked by A2, that is, A1->A2; the target neural network represented by the neural network indication information {1, 0} is A2 followed and linked by A1, that is, A2->A1.

FIG. 5 is a diagram illustrating a scenario converter according to an embodiment. In positioning or CSI feedback, since different channel scenarios such as indoors, factories, urban micro, urban macro, and rural macro have different antennas, user distributions, and environment distributions, AI generalization may occur. That is, a set of neural network parameters needs to be trained for different scenarios. This may lead to the need to store many sets of neural network parameters for the same neural network model. One method is to train a set of neural network parameters according to a standard scenario. In addition, a scenario converter is added. That is, before the neural network of a standard scenario is input, the channel scenario is first converted, and channels of various non-standard scenarios are converted into channels of the standard scenario through the neural network. For example, a set of neural network parameters is trained through a set of standard scenarios (urban micro). For another scenario such as an indoor scenario, only a set of scenario converters is required to map a channel of the indoor scenario to a channel of the urban micro, and then a standard neural network is input into the channel converted to urban micro for processing to obtain the generalization performance required. Only the neural network indication information needs to be configured, including a neural network index of a scenario converter and a neural network index corresponding to an AI processing module. Herein, the AI processing module may be used for positioning, channel estimation, CSI feedback, scheduling, and other aspects.

FIG. 6 is a diagram illustrating an interference canceler according to an embodiment. In a wireless environment, multiple different levels of interference may exist, and different interference strengths may require different neural network parameters to handle. In one method, when a task such as positioning, channel estimation, and CSI feedback is performed, interference cancellation processing is performed on the input data first, that is, an interference canceler is configured. Then output of interference cancellation is used as input of the AI processing module. The AI processing module may be used for positioning, channel estimation, CSI feedback, scheduling, and other aspects. In this manner, only the neural network indication information needs to be configured, including a neural network index of an interference canceler and a neural network index corresponding to an AI processing module.

FIG. 7 is a diagram illustrating the feature extraction at multiple resolutions according to an embodiment. In a wireless environment such as positioning, CSI estimation, and channel estimation, a wireless channel is considered as a picture, and the picture has different characteristics at different resolutions. When the compression is relatively large, a high-level abstract feature may exist. When the compression is relatively low, information such as shading and a stripe may exist. Therefore, sometimes it is necessary to combine channel inputs with different resolutions or compression rates in conjunction with low-level and high-level features to better capture the characteristics of the channel. For example, three neural networks A, B, and C are required to form a target neural network A→B→C. A path D, such as a high-resolution path may be added to improve the performance, which only requires configuring the neural network indication information, including indexes of A, B, C, and D. In addition, another signaling needs to be included to indicate the parallelism between B and D, that is, a parallelism link indication. Thus, a target neural network A→(B, D)→C is obtained.

In a third example embodiment, it is assumed that N original neural networks *A*₁,*A*₂,···,*A_{N}* exi st.

The base station indicates, through the neural network indication information, that K1 original neural networks in N original neural networks and K2 sub-neural networks of one original neural network (without loss of generality, it is assumed that this original neural network is A1 and A1 includes N₁ sub-neural networks *A*_{1,0},*A*_{1,0},···,*A*_{1,*N*1-1}) are used for forming a target neural network. K1 is less than N. K2 is less than or equal to N₁. The UE receives the neural network indication information and forms a target neural network according to the neural network indication information and N original neural networks. For example, the UE queries the locally stored N original neural networks through the neural network indication information, finds K1 original neural networks corresponding to the neural network indication information and K2 sub-neural networks in one original neural network, and forms a target neural network by using the K1 original neural networks and the K2 sub-neural networks.

In an embodiment, the neural network indication information is higher-layer signaling and/or physical layer signaling, including but not limited to an index of a neural network and an index of a sub-neural network. For example, both the base station and the UE have N neural networks, including two original neural networks A1 and A2. The index of the original neural network A1 is 0. The index of the original neural network A2 is 1. Then the neural network indication information may include first-level information and second-level information. For example, the first-level information is {0, 1}, and the second-level information is the sub-neural network index of the original neural network A1, such as {0, 2, 3}. That is, the target neural network is composed of the sub-neural networks {A₁₀, A₁₂, A₁₃} whose sub-neural network indexes are 0, 2, and 3 in the original neural network A1 and all sub-neural networks of the original neural network A2, for example, A₁₀→A₁₂→A₁₃→A2. For another example, the first-level information is {1, 0}, and the second-level information is the sub-neural network index of the original neural network A1, such as {0, 2, 3}. That is, the target neural network is composed of all sub-neural networks of the original neural network A2 and the sub-neural networks {A₁₀, A₁₂, A₁₃} whose sub-neural network indexes are 0, 2, and 3 in the original neural network A1, for example, A2→A₁₀→A₁₂ →A₁₃. For a larger number of original neural networks/sub-neural networks, the target neural network may be determined in a similar manner.

In a fourth example embodiment, it is assumed that N original neural networks *A*₁,*A*_{2,}···,*A_{N}* exi st.

The base station indicates, through the neural network indication information, that in the N original neural networks, K1 sub-neural networks in one original neural network (without loss of generality, it is assumed that this original neural network is A1 and A1 includes N₁ sub-neural networks *A*_{1,0},*A*_{1,1},···,*A*_{1,*N*1-1}) and K2 sub-neural networks in one original neural network (without loss of generality, it is assumed that this original neural network is A2 and A2 includes N₂ sub-neural networks *A*_{2,0},*A*_{2,1},···,*A*_{2,*N*2-1}) are used for forming a target neural network. K1 is less than N₁. K2 is less than N₂. The UE receives the neural network indication information and forms a target neural network according to the neural network indication information and the N original neural networks. For example, the UE queries the locally stored N original neural networks through the neural network indication information, finds sub-neural networks corresponding to the neural network indication information, and forms a target neural network by using the sub-neural networks.

In an embodiment, the neural network indication information is higher-layer signaling and/or physical layer signaling, including but not limited to an index of a neural network and an index of a sub-neural network. For example, both the base station and the UE have N neural networks, including two original neural networks A1 and A2. The index of the original neural network A1 is 0. The index of the original neural network A2 is 1. Then the neural network indication information may include first-level information and second-level information. For example, the first-level information is {0, 1}, and the second-level information is the sub-neural network index of the original neural network A1, such as {0, 2, 3} and the sub-neural network index of the original neural network A2, such as {1, 2, 2 }. That is, the target neural network is composed of the sub-neural networks {A₁₀, A₁₂, A₁₃} whose sub-neural network indexes are 0, 2, and 3 in the original neural network A1 and the sub-neural networks {A₂₁, A₂₂, A₂₂} whose sub-neural network indexes are 1, 2, and 2 in the original neural network A2, for example, A₁₀→A₁₂→A₁₃→A₂₁→A₂₂→A₂₂. For another example, the first-level information is {1, 0}, and the second-level information is the sub-neural network index of the original neural network A1, such as {0, 2, 3} and the sub-neural network index of the original neural network A2, such as {1, 2, 2}. That is, the target neural network is composed of the sub-neural networks {A₂₁, A₂₂, A₂₂} whose sub-neural network indexes are 1, 2, and 2 in the original neural network A2 and the sub-neural networks {A₁₀, A₁₂, A₁₃} whose sub-neural network indexes are 0, 2, and 3 in the original neural network A1, for example, A₂₁→A₂₂→A₂₂→A₁₀→A₁₂→A₁₃. For a larger number of original neural networks/sub-neural networks, the target neural network may be determined in a similar manner.

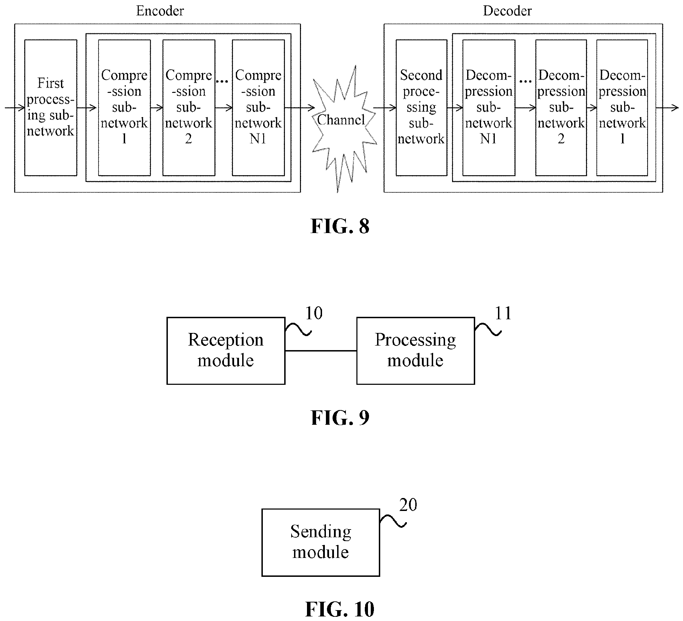

FIG. 8 is a diagram illustrating a CSI feedback module according to an embodiment. In the CSI feedback module, different compression rates exist. For example, the compression rate is 1/N, and N = 2, 4, 8, 16, or other values. Each value requires a set of encoder and decoder parameters, which may lead to too many parameters. Most of these parameters may be shared, and only the compression part or the decompression part may be different. One method is to divide a compression module into multiple compression sub-neural networks. One compression sub-neural network is responsible for a fixed compression rate. For example, if the compression is 1 time, that is, 1/2, N compression sub-neural networks may compress (1/2)^N. Similarly, a decompression module is also divided into multiple decompression sub-networks, and each decompression sub-network is responsible for a fixed decompression rate. For example, a decompressed sub-neural network may restore a channel by 2 times, and N decompressed sub-neural networks may decompress a channel by 2^N times. In an example, parameters of each compression sub-network are shared, that is, the parameters are the same, and parameters of each decompression sub-network are shared. In an example, whether N compression sub-neural networks are shared may be indicated through higher-layer or physical layer signaling, and whether N decompression sub-neural networks are shared may be indicated through higher-layer and/or physical layer signaling. The value of N may be indicated through higher-layer signaling and/or physical layer signaling. In an example, the compression rate and the decompression rate of each compression sub-neural network or decompression sub-neural network are determined by the step size of the convolution kernel. In an example, it is assumed that a neural network encoder includes sub-neural networks An and A₁₂. An denotes a first processing sub-neural network. A₁₂ denotes a compression sub-neural network. A neural network decoder includes sub-neural networks A₂₁ and A₂₂. A₂₁ denotes a second processing sub-neural network. A₂₂ denotes a compression sub-neural network. When the compression rate is (1/2)^N, that is, N compression sub-neural networks need to be configured, the encoder configuration is notified to the UE through the neural network indication information, and the base station determines the decoder of the base station itself according to the value of N. For example, the neural network indication information includes first-level information used for indicating the index of a neural network (encoder) and second-level information used for indicating the configuration of the encoder sub-neural network. For example, {0, 1, 1, 1, 1, 1} indicates that the encoder is composed of a first processing sub-network and four compression sub-neural networks, that is, A₁₁→A₁₂→A₁₂→A₁₂. Similarly, if the decoder also needs an indication, the entire target neural network is A₁₁→A₁₂→A₁₂→A₁₂→A₂₁→A₂₂→A₂₂→A₂₂. Since this kind of network is relatively simple, multiple compression sub-neural networks are instructed to be repeated. The neural network indication information may be a value indicating N such as a compression ratio, a value of N, a compression factor, or other values.

In an embodiment, the UE may feed back the neural network indication information corresponding to at least one set of target neural networks to the base station by acquiring a channel and inputting the channel into different combinations of target neural networks; according to at least one set of neural network indication information, the base station selects one set according to its own scheduling situation to indicate the target neural network to the UE. The neural network indication information may include at least one neural network index and/or at least one sub-neural network index.

FIG. 9 is a diagram illustrating the structure of a neural network generation apparatus according to an embodiment. The apparatus may be configured in the first communication node. As shown in FIG. 9, the apparatus includes a reception module 10 and a processing module 11.

The reception module 10 is configured to receive neural network indication information.

The processing module 11 is configured to generate a target neural network according to N original neural networks and the neural network indication information. N is a positive integer.

The neural network generation apparatus provided in this embodiment is configured to perform the neural network generation method in the embodiments shown in FIG. 2. The implementation principles and technical effects of the neural network generation apparatus provided by this embodiment are similar to those of the preceding embodiments and are not repeated herein.

In an embodiment, the reception module 10 is also configured to receive N original neural networks.

In an embodiment, the neural network indication information includes at least first-level information configured to indicate K original neural networks in the N original neural networks, where K is a positive integer less than or equal to N.

In an embodiment, the neural network indication information also includes second-level information configured to indicate a sub-neural network of an original neural network of L original neural networks in the K original neural networks, where L is a positive integer less than or equal to K.

In an embodiment, the K original neural networks satisfy at least one of the following conditions:
The K original neural networks include at least one scenario conversion neural network.

The K original neural networks include at least one interference and/or noise cancellation neural network.

In an embodiment, the second-level information is configured to indicate at least one of the following information: the number of repetitions of the sub-neural network; parameter sharing enable of the sub-neural network; a parallel or series relationship of the sub-neural network; or the sequence of the sub-neural network.

In an embodiment, the second-level information includes L indication sets. Each indication set is configured to indicate a sub-neural network of an original neural network.

In an embodiment, the first-level information is used for indicating the sequence of the K original neural networks.

In an embodiment, the reception module 10 is also configured to acquire a network training reference signal.

The processing module 11 is also configured to train a neural network parameter of the target neural network according to the network training reference signal.

In an embodiment, a sending module is also included.

The reception module 10 is configured to receive reference signal response information after the sending module sends reference signal request information. The reference signal response information includes the network training reference signal. Alternatively, the reception module 10 is configured to receive the network training reference signal. Alternatively, the sending module sends reference signal request information, and after receiving reference signal response information, the reception module 10 is configured to receive the network training reference signal.

FIG. 10 is a diagram illustrating the structure of an indication information sending apparatus according to an embodiment. The apparatus may be configured in the second communication node. As shown in FIG. 10, the apparatus includes a sending module 20.

The sending module 20 is configured to send neural network instruction information. The neural network indication information is configured to instruct a communication node to generate a target neural network according to N original neural networks. N is a positive integer.

The indication information sending apparatus provided in this embodiment is configured to perform the indication information sending method in the embodiments shown in FIG. 3. The implementation principles and technical effects of the indication information sending apparatus provided by this embodiment are similar to those of the preceding embodiments and are not repeated herein.

In an embodiment, the sending module 20 is also configured to send N original neural networks.

In an embodiment, the neural network indication information includes at least first-level information configured to indicate K original neural networks in the N original neural networks, where K is a positive integer less than or equal to N.

In an embodiment, the neural network indication information also includes second-level information configured to indicate a sub-neural network of an original neural network of L original neural networks in the K original neural networks, where L is a positive integer less than or equal to K.

In an embodiment, the K original neural networks satisfy at least one of the following conditions:
The K original neural networks include at least one scenario conversion neural network.

The K original neural networks include at least one interference and/or noise cancellation neural network.

In an embodiment, the second-level information is configured to indicate at least one of the following information: the number of repetitions of the sub-neural network; parameter sharing enable of the sub-neural network; a parallel or series relationship of the sub-neural network; or the sequence of the sub-neural network.

In an embodiment, the second-level information includes L indication sets. Each indication set is configured to indicate a sub-neural network of an original neural network.

In an embodiment, the first-level information is used for indicating the sequence of the K original neural networks.

In an embodiment, a reception module is also included.

The sending module 20 is configured to send reference signal response information after the reception module receives reference signal request information. The reference signal response information includes a network training reference signal configured to train a neural network parameter of the target neural network. Alternatively, the sending module 20 is configured to send a network training reference signal configured to train a neural network parameter of the target neural network. Alternatively, the reception module receives reference signal request information, and after sending reference signal response information, the sending module 20 is configured to send a network training reference signal configured to train a neural network parameter of the target neural network.

An embodiment of the present application also provides a communication node. The communication node includes a processor, which is configured to, when executing a computer program, perform the method provided in any embodiment of the present application. Specifically, the communication node may be an access network device or a terminal device provided in any embodiment of the present application, which is not specifically limited in the present application.

Illustratively, the following embodiments separately provide a diagram illustrating the structure of a communication node as a base station or as UE.

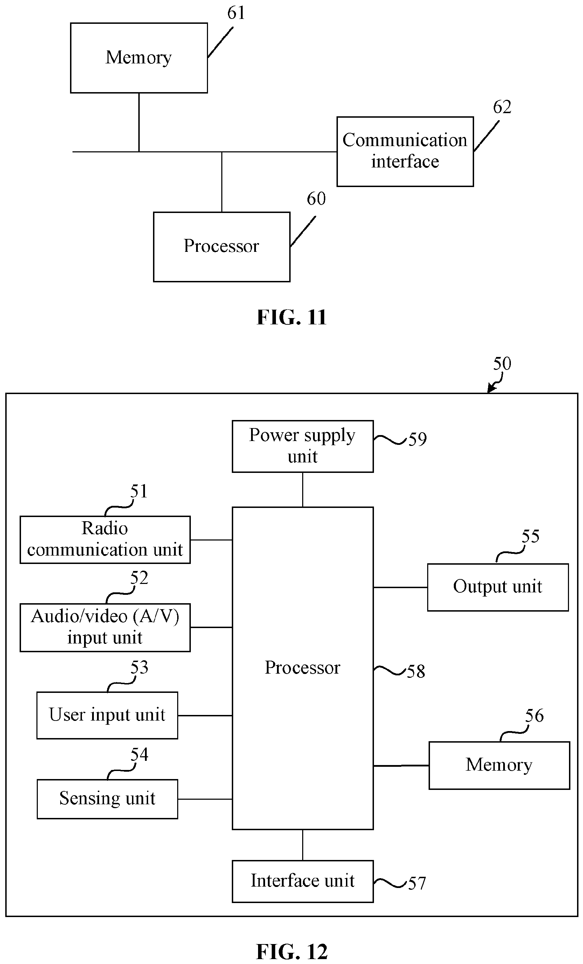

FIG. 11 is a diagram illustrating the structure of a base station according to an embodiment. As shown in FIG. 11, the base station includes a processor 60, a memory 61, and a communication interface 62. One or more processors 60 may be provided in the base station, and one processor 60 is used as an example in FIG. 11. The processor 60, the memory 61, and the communication interface 62 that are in the base station may be connected through a bus or in other manners. In FIG. 11, the connection through the bus is used as an example. The bus represents one or more of several types of bus structures, including a memory bus or a memory controller, a peripheral bus, an Accelerated Graphics Port (AGP), a processor, or a local bus using any bus structure among multiple bus structures.

As a computer-readable storage medium, the memory 61 may be configured to store software programs, computer-executable programs, and modules, such as program instructions/modules corresponding to the method in the embodiments of the present application. The processor 60 runs the software programs, instructions, and modules stored in the memory 61 to execute at least one of function applications and data processing of the base station, that is, to implement the method described above.

The memory 61 may include a program storage region and a data storage region. The program storage region may store an operating system and an application program required by at least one function. The data storage region may store data created depending on the use of a terminal. Additionally, the memory 61 may include a high-speed random-access memory and may also include a non-volatile memory, for example, at least one magnetic disk memory, a flash memory, or another non-volatile solid-state memory. In some examples, the memory 61 may include memories that are remotely disposed with respect to the processor 60. These remote memories may be connected to the base station via a network. Examples of the preceding network include but are not limited to, the Internet, an intranet, a network, a communication network, and a combination thereof.

The communication interface 62 may be configured to receive and send data.

FIG. 12 is a diagram illustrating the structure of a UE according to an embodiment. The UE may be implemented in multiple forms. The UE in the present application may include but is not limited to, mobile terminal devices such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal, and a vehicle-mounted electronic rearview mirror and fixed terminal devices such as a digital television (TV) and a desktop computer.

As shown in FIG. 12, UE 50 may include a radio communication unit 51, an audio/video (A/V) input unit 52, a user input unit 53, a sensing unit 54, an output unit 55, a memory 56, an interface unit 57, a processor 58, and a power supply unit 59. FIG. 12 illustrates the UE including multiple components; but it is to be understood that not all illustrated components are required to be implemented. More or fewer components may be implemented instead.

In this embodiment, the radio communication unit 51 allows radio communication between the UE 50 and a base station or a network. The A/V input unit 52 is configured to receive audio or video signals. The user input unit 53 may generate key input data according to commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration, and the like and generates commands or signals for controlling the operations of the UE 50. The interface unit 57 serves as an interface through which at least one external apparatus can be connected to the UE 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of the present application.

The embodiments of the present application also provide a computer-readable storage medium. The computer-readable storage medium is configured to store a computer program which, when executed by a processor, implements the method provided by any one of the embodiments of the present application.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared or semiconductor system, apparatus or device, or any combination thereof. The computer readable storage medium includes (a non-exhaustive list) an electrical connection having one or more wires, a portable computer disk, a hard disk, a random-access memory (RAM), a read-only memory (ROM), an electrically erasable, programmable read-only memory (EPROM), a flash memory, an optical fiber, a portable compact disk read-only memory (CD-ROM), an optical memory device, a magnetic memory device, or any suitable combination thereof. In the present application, the computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, and radio frequency (RF), or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology, such as, but not limited to, a read-only memory (ROM), a random access memory (RAM) and an optical memory apparatus and system (a digital video disc (DVD) or a compact disc (CD)).

Computer-readable medium may include a non-transitory storage medium. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on multi-core processor architecture.

## Claims

1. A neural network generation method, comprising:
receiving neural network indication information; and
generating a target neural network according to N original neural networks and the neural network indication information, wherein N is a positive integer.

2. The method of claim 1, further comprising:
receiving the N original neural networks.

3. The method of claim 1, wherein
the neural network indication information comprises at least first-level information configured to indicate K original neural networks in the N original neural networks, wherein K is a positive integer less than or equal to N.

4. The method of claim 3, wherein
the neural network indication information further comprises second-level information configured to indicate a sub-neural network of an original neural network of L original neural networks in the K original neural networks, wherein L is a positive integer less than or equal to K.

5. The method of claim 3, wherein the K original neural networks satisfy at least one of following conditions:
the K original neural networks comprise at least one scenario conversion neural network;
the K original neural networks comprise at least one interference and/or noise cancellation neural network.

6. The method of claim 4, wherein the second-level information is configured to indicate at least one of following information:
a number of repetitions of the sub-neural network;
parameter sharing enable of the sub-neural network;
a parallel or series relationship of the sub-neural network; or
a sequence of the sub-neural network.

7. The method of claim 4, wherein the second-level information comprises L indication sets, and each indication set of the L indication sets is configured to indicate a sub-neural network of an original neural network.

8. The method of claim 3, wherein the first-level information is configured to indicate a sequence of the K original neural networks.

9. The method of any one of claims 1 to 8, wherein after generating the target neural network, the method further comprises:
acquiring a network training reference signal; and
training a neural network parameter of the target neural network according to the network training reference signal.

10. The method of claim 9, wherein acquiring the network training reference signal comprises:
sending reference signal request information; and receiving reference signal response information, wherein the reference signal response information comprises the network training reference signal;
or,
receiving the network training reference signal;
or,
sending reference signal request information; and after receiving reference signal response information, receiving the network training reference signal.

11. An indication information sending method, comprising:
sending neural network indication information configured to instruct a communication node to generate, according to N original neural networks, a target neural network, wherein N is a positive integer.

12. The method of claim 11, further comprising:
sending the N original neural networks.

13. The method of claim 11, wherein
the neural network indication information comprises at least first-level information configured to indicate K original neural networks in the N original neural networks, wherein K is a positive integer less than or equal to N.

14. The method of claim 13, wherein
the neural network indication information further comprises second-level information configured to indicate a sub-neural network of an original neural network of L original neural networks in the K original neural networks, wherein L is a positive integer less than or equal to K.

15. The method of claim 13, wherein the K original neural networks satisfy at least one of following conditions:
the K original neural networks comprise at least one scenario conversion neural network;
the K original neural networks comprise at least one interference and/or noise cancellation neural network.

16. The method of claim 14, wherein the second-level information is configured to indicate at least one of following information:
a number of repetitions of the sub-neural network;
parameter sharing enable of the sub-neural network;
a parallel or series relationship of the sub-neural network; or
a sequence of the sub-neural network.

17. The method of claim 14, wherein the second-level information comprises L indication sets, and each indication set of the L indication sets is configured to indicate a sub-neural network of an original neural network.

18. The method of claim 13, wherein the first-level information is configured to indicate a sequence of the K original neural networks.

19. The method of any one of claims 11-18, wherein after sending the neural network indication information, the method further comprises:
receiving reference signal request information; and sending reference signal response information, wherein the reference signal response information comprises a network training reference signal configured to train a neural network parameter of the target neural network;
or,
sending a network training reference signal configured to train a neural network parameter of the target neural network;
or,
receiving reference signal request information; and after sending reference signal response information, sending a network training reference signal configured to train a neural network parameter of the target neural network.

20. A communication node, comprising a processor configured to, when executing a computer program, implement the neural network generation method of any one of claims 1 to 10 or implement the indication information sending method of any one of claims 11 to 19.

21. A computer-readable storage medium storing a computer program which, when executed by a processor, implements the neural network generation method of any one of claims 1 to 10 or implements the indication information sending method of any one of claims 11 to 19.
